Europäisches Patentamt

European Patent Office

Office européen des brevets

(19)

(11) Publication number: **0 200 401**
**A2**

# EUROPEAN PATENT APPLICATION

(12)

(21) Application number: **86302683.7**

(22) Date of filing: **10.04.86**

(51) Int. Cl.4: **B60T 11/16**

(30) Priority: **18.04.85 GB 8509951**

(43) Date of publication of application:
**10.12.86 Bulletin 86/45**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Price, Anthony George**
**14 Meadow Lane Croesyceiliog Cwmbran**
**Gwent Wales(GB)**
Inventor: **Campbell, Roy**
**1 Marlbrook Lane Lickey Rock**
**Bromsgrove Worcestershire(GB)**
Inventor: **Gwilliam, Malcolm Clive**
**6 Finchall Croft**
**Solihull West Midlands, B92 9QP(GB)**
Inventor: **Taylor, Michael Anthony**
**46 Main Road Gilwern**
**Gwent Wales(GB)**

(74) Representative: **Lerwill, John et al**
**A.A. Thornton & Co. Northumberland House**
**303-306 High Holborn**
**London, WC1V 7LE(GB)**

(54) Improvements in and relating to master cylinders.

(57) A master cylinder has a mounting flange 1 formed with notches 4 during casting to receive the mounting bolts, and the mounting face of the flange is left unmachined while a boot seal 6 covering the rear end of the master cylinder is modified to seal also between the body and the opening in the supporting bulkhead 3. Conventional machining steps performed on the flange are thereby obviated.

Improvements in and relating to Master Cylinders

This invention is concerned with master cylinders and their manufacture. In particular the invention is directed to a master cylinder intended to be mounted on a bulkhead wall which separates a vehicle passenger compartment from the engine compartment of the vehicle.

It is common e.g. on tractors, for a brake master cylinder to be mounted on a bulkhead wall, with a rear end portion of the master cylinder body protruding through an opening provided in the bulkhead wall. The body is generally cast from metal and formed with a mounting flange for engaging the bulkhead wall around the opening. To facilitate a flush fit between the flange and supporting wall it has been the practice hitherto to machine the rear face of the flange. In addition, holes have been machined in the flange to accommodate the threaded fasteners used to clamp the flange against the bulkhead wall, and a groove or the like has been machined around the body for sealing engagement by a protective sealing boot which covers the rear end of the master cylinder to prevent ingress of dirt and moisture. These machining steps are a disadvantage since they increase manufacturing costs. The present invention seeks to remove, or at least substantially alleviate the disadvantage.

In accordance with a first aspect of the invention there is provided a master cylinder comprising a body having a mounting flange, and holes in the flange for receiving fastening elements to secure the flange against a supporting wall, characterised in that the holes have the form of notches in the peripheral edge of the flange.

The notches can be conveniently formed while casting the body, whereby a subsequent machining step to provide the notches or conventional bolt holes is eliminated.

In accordance with a second aspect of the invention there is provided a master cylinder comprising a body formed as a casting and including a mounting flange, the flange having a rear face arranged to be secured against a supporting wall with an end portion of the body projecting into an opening in the wall, characterised in that the rear face of the flange is free of any machining treatment carried out to improve the surface smoothness, subsequent to the flange being formed, and the body carries sealing means adjacent the rear face of the flange to provide a fume seal between the body and the supporting wall.

According to a third aspect of the invention there is provided a master cylinder comprising a body including a mounting flange having a rear face arranged to be secured against a supporting wall with an end portion of the body projecting into an opening in the wall, an actuating rod protruding from the rear end of the body, and a sealing boot covering the rear end of the body and arranged to provide a seal between said projecting end portion and the actuating rod, characterised in that the boot includes integral sealing means at the forward end thereof, said sealing means being arranged to engage between the flange and the supporting wall to provide a fume seal therebetween and to secure the boot to the body.

With the forward end of the boot held securely between the flange and supporting wall the need to machine a boot retention groove in the rearwardly projecting body portion is precluded. The sealing means serves to preclude any seepage of fumes into the vehicle passenger compartment between the flange and the supporting bulkhead wall against which it is mounted.

A preferred master cylinder embodying the invention incorporates all of the aspects mentioned above, so that the mounting flange and the outer surface of the rearwardly projecting body portion need not be subjected to any machining steps.

A better understanding of the invention will be had from the following detailed description which is given with reference to the accompanying drawings in which:

Figure 1 is a side view of the rear end portion of a master cylinder body;

Figure 2 is a profile of the rear end of the body;

Figures 3 and 4 are similar views to Figure 2 showing alternative flange shapes;

Figure 5 is a scrap sectional view illustrating the master cylinder mounted on a bulkhead wall of a vehicle, a detail therefore being shown on a larger scale;

Figure 6 is a detailed sectional view of a front end part of the sealing boot;

Figure 7 is a view similar to Figure 5 and illustrating a modified seal arrangement;

Figure 8 is a longitudinal section through a rear end portion of a master cylinder embodying the invention; and

Figure 9 is a cross-section through the sealing boot before being fitted to the master cylinder of Figure 8.

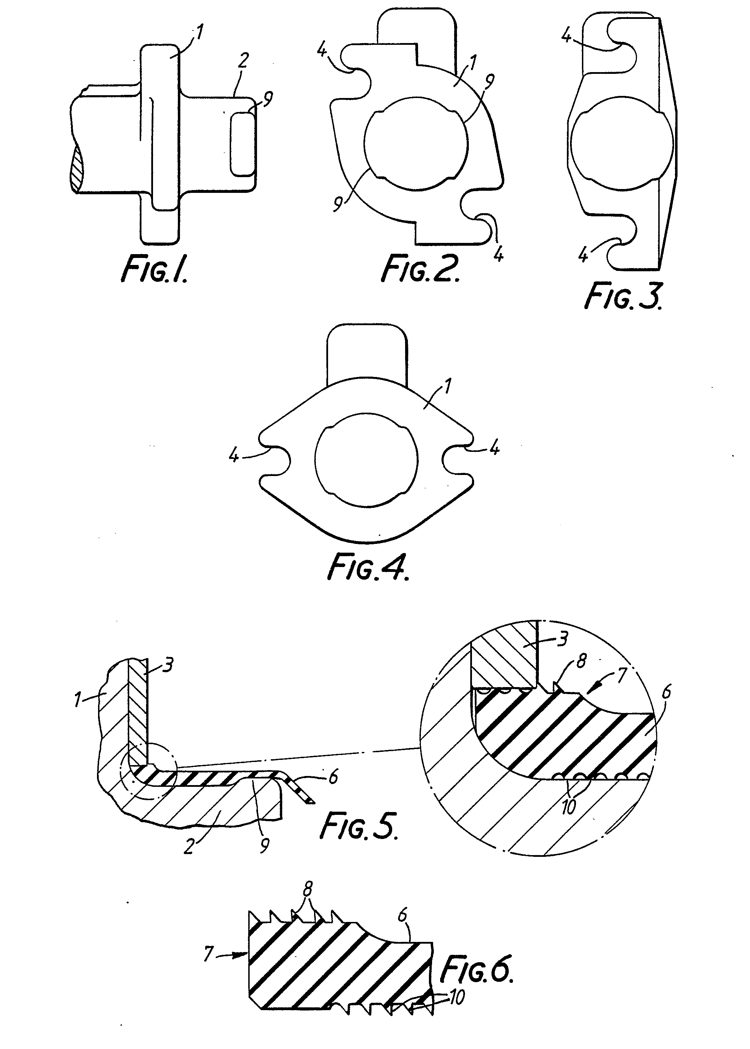

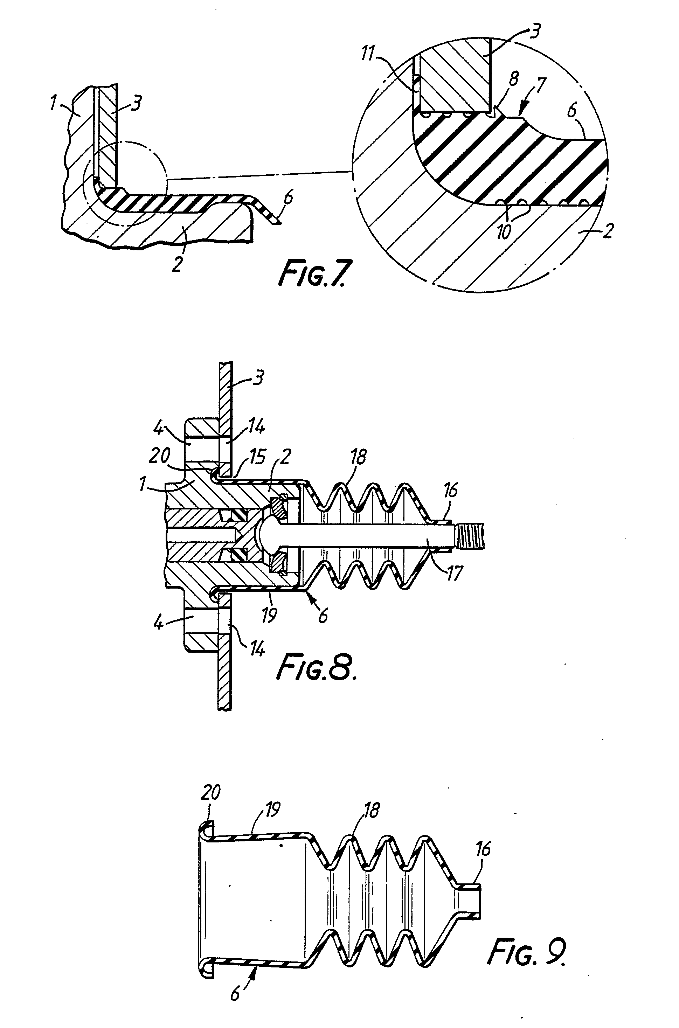

The master cylinder body shown in Figures 1 and 2 is cast from metal and includes a mounting flange 1 adapted to be firmly mounted against a bulkhead wall separating engine and passenger compartments in a vehicle. A rear end portion 2 of the body projects beyond the flange and, in use, protrudes through an opening provided in the bulkhead wall 3, as may be seen in Figure 5. The flange is provided with a pair of diametrically opposed slots or notches 4 in its periphery, the notches being formed at the time of casting the body. Neither the notches, nor the rear mounting face of the flange 1 are subject to any machining treatment. The notches replace the conventional bolt holes and are adapted to receive the fastening elements (not shown) employed to clamp the flange against the bulkhead wall to fix the master cylinder in position. Alternative flange configurations with notches are illustrated in Figures 3 and 4. While a single pair of notches has been shown it will be understood that additional notches could be provided if desired.

To preclude any seepage of fumes between the unmachined flange face and the bulkhead wall 3, the master cylinder is equipped with sealing means to seal between the opening in the bulkhead and the rear portion of the master cylinder extending through the opening. The sealing means is conveniently integral with the forward end of a boot 6 which is arranged in known manner to provide a moisture and dirt barrier between the rear end of the master cylinder body and the actuating rod (not shown) which passes through this end of the body. As may be seen clearly in Figures 5 and 6, the seal comprises a slightly thickened ring 7 having a series of parallel annular ribs 8 on its external surface. The ribs are designed to become compressed against the peripheral wall of the bulkhead opening to form a fume seal. In addition, these ribs serve to compensate for any slight misalignment between the opening and the master cylinder, which may arise through the use of the unmachined notches 4 to locate and fix the master cylinder in position.

To assist retention of the boot, the rear end of the body is formed with external projections 9 (two as shown). Furthermore, the boot is provided with annular ribs 10 on its inner surface in the region where it adjoins the sealing ring 7, these ribs 10 being arranged to grip the master cylinder body to oppose rearward displacement of the ring 7.

The modified embodiment of the sealing boot shown in Figure 7 includes an additional annular lip 11 which is adapted to be clamped between the rear face of the mounting flange and the bulkhead to enhance sealing and boot retention. When the lip 11 is included the annular ribs 8 may be omitted, as may the ribs 10.

In the embodiment of Figure 8, the master cylinder body consists of a casting and includes a mounting flange 1 formed with diametrically opposed notches 4, e.g. as depicted in any of Figures 1 to 4. The notches pass through two bosses which project slightly from the rear face of the flange for abutment against the bulkhead wall 3 to which the master cylinder is secured by bolts (not shown). The bolts are inserted through the notches 4 and holes 14 provided in the wall 3 to register with the notches. The rear end portion 2 of the body projects through an opening 15 in the wall 3 and is fitted with a sealing boot 6. The boot includes a collar 16 which embraces the actuating rod 17 protruding through the rear end of the body, a bellows section 18, a sleeve 19 which surrounds the rear body portion 2, and a reversed sealing lip 20 at the forward end of the sleeve. The sleeve tapers towards the lip 20 (see Figure 9) for gripping the body portion 2 when the boot is fitted on the body. The free edge of the lip 20 is arranged to be pressed against the bulkhead wall 3 by the mounting flange 1 so that a fume seal is formed between the wall 3 and the master cylinder body. The bellows section 18 of the sealing boot ensures adequate flexibility in the axial direction for operation of the master cylinder to be unimpeded by the boot. As in the previous embodiments, the mounting flange is free of any machining treatment.

From the foregoing it will be appreciated that each of the described master cylinders avoids completely the expense of machining the mounting flange during manufacture by the relatively simple and less expensive measure of utilising a modified boot seal.

Furthermore, a circumferential groove is no longer necessary in the external surface of the body portion projecting rearwardly from the flange and by not having to machine the outside of the cast body there is secured an additional advantage of alleviating corrosion problems which have been encountered in the past due to the protective coating plated on to the casting being machined away.

## Claims

1. A master cylinder comprising a body having a mounting flange (1), and holes in the flange for receiving fasteners to secure the flange against a supporting wall (3), characterised in that the holes have the form of notches (4) in the peripheral edge of the flange (1).

2. A master cylinder according to claim 1, wherein the body is a metal casting and the notches (4) are formed in the flange (1) at the time of casting the body.

3. A master cylinder according to claim 2, wherein the notches (4) are free of any machining process performed on the flange.

4. A master cylinder comprising a body formed as a casting and including a mounting flange (1), the flange having a rear face arranged to be secured against a supporting wall (3) with an end portion - (2) of the body projecting into an opening in the wall, characterised in that the rear face of the flange is free of any machining treatment carried out to improve the surface smoothness subsequent to the flange being formed, and the body carries sealing means (7; 7, 11; 20) adjacent the rear face of the flange to provide a fume seal between the body and the supporting wall (3).

5. A master cylinder according to claim 4, wherein the sealing means (7; 7, 11; 20) is integral with a sealing boot (6) arranged to provide a seal between the body and an actuating rod (17) protruding from the rear end of the body.

6. A master cylinder comprising a body including a mounting flange (1) having a rear face arranged to be secured against a supporting wall (3) with an end portion (2) of the body projecting into an opening in the wall, an actuating rod (17) protruding from the rear end of the body, and a sealing boot (6) covering the rear end of the body and arranged to provide a seal between said projecting end portion and the actuating rod, characterised in that the boot (6) includes integral sealing means - (11;20) at the forward end thereof, said sealing means being arranged to engage between the flange (1) and the supporting wall (3) to provide a fume seal therebetween and to secure the boot to the body.

7. A master cylinder according to claim 4,5 or 6, wherein the sealing means comprises a ring (7) for sealing between the rear end portion (2) of the body and the edge of the opening in the supporting wall (3).

8. A master cylinder according to claim 7, wherein the ring (7) has annular ribs (8,10) on the outer surface and/or the inner surface thereof.

9. A master cylinder according to any one of claims 4 to 8, wherein the sealing means comprises an annular sealing lip (11) located against the rear face of the flange (1) to be clamped between the flange and the supporting wall.

10. A master cylinder according to claim 4,5 or 6, wherein the sealing means comprises an annular lip (20) with a free edge directed rearwardly to be pressed against the supporting wall (3) by the flange (1).

11. A master cylinder according to claim 9, wherein lip (20) is integral with the foreward end of a sleeve (19) surrounding the rear end portion (2) of the body, the lip being reversed to define the rearwardly directed edge radially outwardly of the sleeve - (19).

**FIG.1.**

**FIG.2.**

**FIG.3.**

**FIG.4.**

**FIG.5.**

**FIG.6.**

FIG.7.

FIG.8.

FIG.9.